# EUROPEAN PATENT APPLICATION

(11) **EP 3 040 685 A1**
(43) Date of publication of application: **06.07.2016**
(21) Application number: 16152774.2
(22) Date of filing: 29.12.2011
(51) Int. Cl.: G01C 21/36, G01C 21/26, G01C 21/00, G08G 1/0969, B60W 50/14, G08G 1/0968, G08G 1/0962, G08G 1/0967

(54) **NAVIGATION SYSTEMS THAT ENHANCE DRIVER AWARENESS**

(62) Divisional of application: 11878590.6
(71) Applicant: INTEL Corporation, Santa Clara, CA 95052 (US)
(72) Inventor: Healey, Jennifer, San Jose, 95116 (US); Zafiroglu, Alexandra, Santa Clara, OR 95054 (US); Rosario, Barbara, Berkeley, CA 94708 (US)
(74) Representative: Goddar, Heinz J.

(57) **Abstract**

Navigation systems that enhance driver awareness are provided. Information associated with a location of a vehicle may be determined. Based at least in part upon the determined location, awareness information associated with the vehicle may be collected. The awareness information may include at least one of crime information, accident information, legal information, or future traffic information. Based at least in part upon the collected awareness information, output information may be generated for presentation, and the generated output information may be output.

## Description

### TECHNICAL FIELD

Aspects of the disclosure relate generally to vehicle navigation systems, and more particularly, to navigation systems that promote or enhance additional driver awareness.

### BACKGROUND

The use of vehicle navigation systems is now ubiquitous. Navigation systems typically track the location of a vehicle and display the location along with map data in a human-readable format. Additionally, navigation systems typically output visual and audio directions associated with a mapped route. Although the information output by conventional navigation systems typically al lows a user to determine a location of a vehicle and to reach an intended destination, there is an opportunity to provide a wide variety of additional information to a user. For example, there is an opportunity for improved navigation systems and associated methods that enhance user awareness and understanding.

### BRIEF DESCRIPTION OF THE FIGURES

Reference will now be made to the accompanying drawings, which are not necessarily drawn to scale, and wherein:
FIG. 1 is a block diagram of an example navigation system or architecture that may be utilized in accordance with various embodiments of the disclosure.
FIG. 2 is a flow diagram of an example method for generating and oulputling awareness information outputs associated with a vehicle and/or vehicle navigation.
FIG. 3 is a flow diagram of an example method for generating and outputting crime-related awareness information outputs associated with a vehicle and/or vehicle navigation.
FIG. 4 is a flow diagram of an example method for generating and outputting accident-related awareness information outputs associated with a vehicle and/or vehicle navigation.
FIG. 5 is a flow diagram of an example method for generating and outputting legal-related awareness information outputs associated with a vehicle and/or vehicle navigation.
FIG. 6 is a flow diagram of an example method for generating and outputting future traffic and/or event-related awareness information outputs associated with a vehicle and/or vehicle navigation.
FIG. 7 is a flow diagram of an example method for modifying a vehicle route based at least in part upon awareness information.

### DETAILED DESCRIPTION

Embodiments of the disclosure may provide systems, methods, and apparatus for generating and outputting a wide variety of awareness information associated with a vehicle and/or vehicle navigation. In certain embodiments, a navigation system (e.g., a built in navigation system, a brought in navigation system, etc.) may determine a location of a vehicle. For example, global positioning system ("GPS") coordinates and/or other suitable location information may be utilized to determine a location of the vehicle. Based at least in part upon the determined location, a wide variety of suitable awareness information associated with the vehicle may be collected. For example, crime information, accident information, legal information, and/or future traffic information may be collected from any number of suitable data sources (e.g., external data sources, etc.) and/or servers. Based at least in part upon the collected awareness information, a wide variety of output information may be generated for presentation to a user. For example, one or more graphical displays and/or audio alerts associated with the awareness information may be generated and output.

In certain embodiments, a navigation system may also take a wide variety of user preferences into consideration during the collection and/or processing of awareness information. For example, a user profile may be maintained and/or utilized to identify types of awareness information that should be collected, sources that should be accessed, threshold conditions for generating warnings and/or for modifying a route, and/or presentation preferences (e.g., audio outputs, visual indicators, display overlays, communications sent to user devices, etc.). Additionally, as desired in various embodiments, a wide variety of vehicle parameters may be evaluated in conjunction with the evaluation of awareness information and/or the generation of suitable output information. Examples of suitable vehicle parameters include, but are not limited to, a speed of the vehicle, a direction of travel, a current status of the vehicle (e.g., parked, moving, stopped, etc.), an amount of remaining fuel, etc. Additionally, a wide variety of suitable evaluations may incorporate one or more vehicle parameters. For example, a user may be warned not to stop a vehicle in an area associated with a high incidence of car thefts. As another example, if it is determined that a vehicle is traveling too quickly through an accident-prone section of a highway, a suitable warning message may be generated.

Certain embodiments will now be described more fully hereinafter with reference to the accompanying drawings, in which various embodiments and/or aspects are shown. However, various aspects may be embodied in many different forms and should not be construed as limited to the embodiments set forth herein; rather, these embodiments are provided so that this disclosure will be thorough and complete, and will fully convey the scope of the disclosure to those skilled in the art. Like numbers refer to like elements throughout.

### System Overview

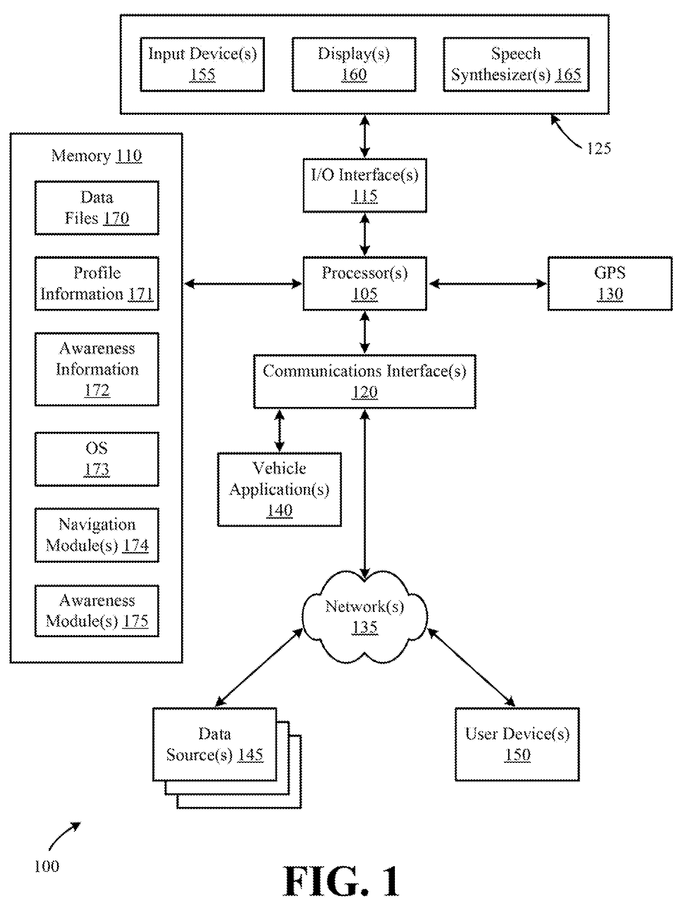

FIG. 1 illustrates a block diagram of an example system 100, architecture, or component that may be utilized to enhance user awareness and understanding during the navigation of a vehicle. In certain embodiments, the system 100 may be implemented or embodied as a navigation system, such as a navigation system built into a vehicle or a navigation system brought into a vehicle. In other embodiments, the system 100 may be implemented or embodied as a component of another system or device within a vehicle, such as an in-vehicle infotainment ("IV1") system associated with a vehicle. In yet other embodiments, one or more suitable computer-readable media may be provided for enhancing user awareness. These computer-readable media may include computer-executable instructions that are executed by one or more processing devices in order to process speech input. As used herein, the term "computer-readable medium" describes any form of suitable memory or memory device for retaining information in any form, including various kinds of storage devices (e.g., magnetic, optical, static, etc.). Indeed, various embodiments of the disclosure may be implemented in a wide variety of suitable forms.

As desired, the system 100 may include any number of suitable computing devices associated with suitable hardware and/or software for processing speech input. These computing devices may also include any number of processors for processing data and executing computer-executable instructions, as well as other internal and peripheral components that are well-known in the art. Further, these computing devices may include or be in communication with any number of suitable memory devices operable to store data and/or computer-executable instructions. By executing computer-executable instructions, a special-purpose computer or particular machine may be provided for collecting and evaluating awareness information in order to enhance user awareness.

With reference to FIG. 1, the system may include one or more processors 105, memory devices 110 (generally referred to as memory 110), input/output ("I/O") interfaces 1 15, and/or communications interfaces 120 (e.g., network interfaces, data bus interfaces, etc.). Additionally, the system may include any number of other components in communication with the processors 105, such as I/O devices 125, a suitable global positioning system ("GPS") 130 or other location determination system, and/or any number of components and/or devices configured to execute applications that communicate information to the processors 105. A wide variety of various applications and/or devices may be in communication with the processors 105 via the communications interfaces 120 and, as desired, any number of suitable networks 1 35. For example, one or more vehicle applications 140, data sources 145 (e.g., external awareness information data sources, etc.), and/or user devices 1 50 (e.g., mobile devices, tablet computers, etc.) may be in communication with the processors 105.

The processors 105 may include any number of suitable processing devices, such as a central processing unit ("CPU"), a digital signal processor ("DSP"), a reduced instruction set computer ("RISC"), a complex instruction set computer ("CISC"), a microprocessor, a microcontroller, a field programmable gate array ("FPGA"), or any combination thereof. As desired, a chipset (not shown) may be provided for controlling communications between the processors 105 and one or more of the other components of the system 100. In one embodiment, the system 100 may be based on an Intel® Architecture system, and the processor 105 and chipset may be from a family of Intel® processors and chipsets, such as the Intel® Atom® processor family. The processors 105 may also include one or more processors as part of one or more application-specific integrated circuits ("ASICs") or application-specific standard products ("ASSPs") for handling specific data processing functions or tasks.

The memory 110 may include any number of suitable memory devices, such as caches, read-only memory devices, random access memory ("RAM"), dynamic RAM ("DRAM"), static RAM ("SRAM"), synchronous dynamic RAM ("SDRAM"), double data rate ("DDR") SDRAM ("DDR-SDRAM"), RAM-BUS DRAM ("RDRAM"), flash memory devices, electrically erasable programmable read only memory ("EEPROM"), non-volatile RAM ("NVRAM"), universal serial bus ("USB") removable memory, magnetic storage devices, removable storage devices (e.g., memory cards, etc.), and/or non-removable storage devices. As desired, the memory 110 may include internal memory devices and/or external memory devices in communication with the system 100. The memory 110 may store data, executable instructions, and/or various program modules utilized by the processors 105. Examples of data that may be stored by the memory 110 include data files 170, user profile information 171, awareness information 172, and/or any number of suitable program modules and/or applications that may be executed by the processors 105, such as an operating system ("OS") 173, one or more navigation modules 174, and/or one or more awareness modules 175.

The I/O interfaces 115 may facilitate communication between the processors 105 and any number of suitable input and/or output devices 125. Examples of suitable input/output devices 125 include, but are not limited to, one or more input devices 155 (e.g., microphones, other audio capture devices, buttons, knobs, touch screen displays, other input elements, etc.), one or more displays 1 60, and/or one or more speech synthesizers 165 and/or associated speakers. The various input/output devices 125 may include any number of suitable devices that facilitate the collection of information (e.g., user inputs, etc.) to be provided to the processors 105 and/or the output of information for presentation to a user. The communications interfaces 120 may facilitate communication between the processors 105 and/or any number of suitable data buses and/or networks, such as a vehicle data bus (e.g., a car area network bus ("CANBUS")) and/or any number of wireless networks 135 or combinations of networks (e.g., a Bluetooth-enabled network, a Wi-Fi enabled network, a cellular network, the Internet, etc.).

The data files 170 may include any suitable data that facilitates the operation of the system 100 and/or communication between various components of the system 100. For example, the data files 170 may include, but are not limited to, identification information and/or network address information associated with other components of the system 100 and/or any number of external devices or systems, information that may be utilized to identify one or more users (e.g., stored image data, voice samples, etc.), vehicle location in formation and/or other vehicle parameters, information associated with sources of awareness information (e.g., data sources 145, user devices 150, etc.), and/or any number of language models that may be utilized to generate textual and/or audio outputs. The user profile information 171 may include a wide variety of user identification information, preferences, and/or parameters associated with one or more users. For example, the user profile information may include, but is not limited to, user identification information, user preferences associated with types of awareness information to be obtained and evaluated, user preferences associated with sources of awareness information, user preferences associated with the generation and/or modification of a vehicle route, and/or user preferences associated with data, statistics, and/or messages to be displayed or otherwise output by a navigation system. The awareness information 172 may include a wide variety of information collected from any number of suitable sources (e.g., data sources 145, user devices 150, etc.), including but not limited to, crime information, accident information, legal information, future traffic information, and/or travel cost information.

The OS 173 may be a suitable module or application that facilitates the general operation of a navigation system, as well as the execution of other program modules, such as the navigation modules 174 and/or the awareness modules 175. The navigation modules 174 may include any number of suitable software modules and/or applications that facilitate the generation of a route for a vehicle. In operation, a navigation module 174 may be configured to receive location information, such as GPS coordinates, from a suitable location component, such as the GPS component 130. Additionally, the navigation module 174 may be configured to generate output information, such as display information, associated with the location of the vehicle, and the location information may be communicated to one or more suitable displays 160 for presentation to a user.

In certain embodiments, the navigation module 174 may additionally be configured to generate or determine a route between the vehicle location and a destination. For example, a shortest or fastest route to a destination or selected point of interest may be determined. In certain embodiments, information associated with the route may be output via one or more displays 160, and/or information associated with the route may be provided to the awareness modules 175. Additionally, as desired, the navigation module 174 (and/or an awareness module 175) may also take a wide variety of user preferences into consideration during the generation of a desired route for a vehicle and/or during the output of directions. For example, a user profile may be maintained and/or utilized to identify any number of user parameters and/or preferences associated with identifying a destination and/or generating or modifying a route to the destination based upon awareness information.

The awareness modules 175 may include any number of suitable software modules and/or applications that facilitate the collection and/or evaluation of a wide variety of awareness information. In operation, an awareness module 175 may be configured to collect awareness information from one or more sources (e.g., the data sources 145, the user devices 150, other vehicles, etc.), and the awareness module 175, and to evaluate at least a portion of the information to generate one or more outputs (e.g., audio outputs, graphical display information, messages to be communicated to user devices, etc.) for presentation to a user.

For example, crime, accident report, legal, future traffic and event, and/or other information may be obtained from one or more data sources 145, such as police systems or servers, blogs, civilian reports, news agencies, and/or message boards. In certain embodiments, a location of a vehicle and/or changes in the location (e.g., crossing of borders, etc.) may be determined, for example, from GPS coordinates, and awareness information associated with the vehicle may be collected based at least in part upon the location of the vehicle. As desired, a wide variety of vehicle conditions may also be evaluated in a determination of whether to collect awareness information. For example, awareness information may be collected based at least in part upon a determination that a vehicle has stopped or been parked. Additionally, in certain embodiments, the awareness information may be collected directly from one or more data sources 145 by the vehicle and/or navigation system 100. In other embodiments, awareness information may be obtained from other components that collected the information from one or more data sources 145, for example, user devices 150 (e.g., mobile devices, tablet computers, etc.) and/or other vehicles.

Once awareness in formation is collected, the awareness module 175 may perform a wide variety of suitable evaluations based upon the collected information. For example, the awareness module 175 may evaluate at least a portion of the collected information to determine awareness levels associated with various types of information, such as accident likelihood, crime data, and/or future or expected traffic. As another example, the awareness module 175 may evaluate the awareness information to generate a wide variety of instructions, warnings, and/or informational content. Additionally, a wide variety of suitable outputs (e.g., audio outputs, display information, messages, etc.) may be generated based at least in part upon an evaluation of the received awareness information. For example, overlay information (e.g., awareness level information by street or area, etc.) may be generated for presentation via a display 160. As another example, icons and/or other display elements may be generated. As yet another example, one or more messages may be generated for output via a display 160 and/or speech synthesizer 165 and/or for communication to one or more user devices 150.

In certain embodiments, a user's current task may also be taken into consideration by an awareness module 175 during the output of awareness information outputs. For example, vehicle parameters, and/or sensor data (e.g., image data, etc.) associated with a driver of the vehicle may be evaluated in order to determine a current cognitive task of the driver. Generated messages may then be selectively output based upon the identified cognitive task.

For example, a message may be output at a point in time when the driver's task has a relatively low demand time, such as when the vehicle is waiting at a traffic light. In this regard, safety may be enhanced.

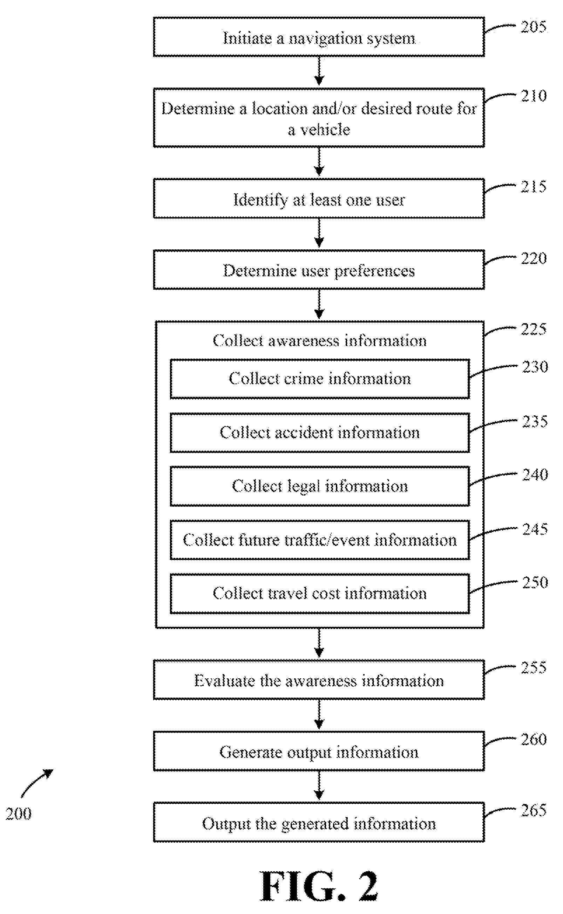

As desired, the navigation modules 174 and/or the awareness modules 175 may be implemented as any number of suitable modules. Alternatively, a single module may perform the combined functions described for the modules. A few examples of the operations of the modules are described in greater detail below with reference to FIGS. 2-7. As a result of collecting and generating outputs associated with awareness information, a user's awareness or understanding of a driving environment may be enhanced.

With continued reference to FIG. 1 , the GPS 130 may be any suitable device configured to determine location based upon interaction with a network of GPS satellites. The GPS 130 may provide location information (e.g., coordinates) and/or information associated with changes in location to the processors 105. In this regard, the location of a vehicle may be evaluated and utilized to map a route, identify directions, and/or to obtain a wide variety of awareness information.

The vehicle applications 140 may include any suitable applications associated with a vehicle, including but not limited to, an application that monitors various vehicle parameters (e.g., speed, direction, etc.) and/or an application that manages communication with other vehicles. As desired, one or more vehicle applications 140 may be executed by the processors 105. Other vehicle applications 140 may be executed by other vehicle processing components, and information output by the vehicle applications 140 may be received via any number of suitable vehicle data buses and/or networks. The data sources 145 may include any number of suitable data sources for awareness information, such as any number of external data sources. Examples of suitable data sources include, but are not limited to, police systems or servers, blogs, civilian reports, news agencies, traffic servers, governmental agencies, and/or message boards. Additionally, in certain embodiments, communication may be established via any number of suitable networks (e.g., a Bluetooth-enabled network, a Wi-Fi network, a wired network, a wireless network, etc.) with any number of user devices 150, such as mobile devices and/or tablet computers. In this regard, awareness information and/or input information (e.g., user preferences, user requests, etc.) may be received from the user devices and/or output information may be provided to the user devices 150.

With reference to the input/output devices 125, the input devices 155 may include any suitable devices configured to receive input data, such as microphones (or other audio detection devices) configured to collect audio data and/or voice commands, image sensors (e.g., cameras, charge-coupled devices ("CCDs"), complementary metal oxide semiconductor ("CMOS") sensors, etc.) configured to collect image data (e.g., data utilized to identify a user, data utilized to determine a cognitive task of a user, etc.), and/or any number of suitable input elements configured to receive user input, such as buttons. knobs, switches, touch screens, capacitive sensing elements, etc. The displays 160 may include any number of suitable display devices, such as a liquid crystal display ("LCD"), a light-emitting diode ("LED") display, an organic light-emitting diode ("OLED") display, a touch screen display, and/or a heads up display. As desired, displays may be situated at a wide variety of suitable locations within a vehicle, such as a dash, a console, a headrest, etc. Additionally, in certain embodiments, suitable projection devices may be configured to project display information onto one or more surfaces, such as a window of the vehicle. The speech synthesizer 165 may include any number of suitable components configured to output audio speech inputs. In addition to or as an alternative to a speech synthesizer 165, any number of suitable speakers and/or other audio output devices may be provided.

The system 100 or architecture described above with reference to FIG. 1 is provided by way of example only. As desired, a wide variety of other systems and/or architectures may be utilized to generate and output natural language inputs. These systems and/or architectures may include different components and/or arrangements of components than that illustrated in FIG. 1 .

### Operational Overview

FIG. 2 is a flow diagram of an example method 200 for generating and outputting awareness information outputs. In certain embodiments, the operations of the method 200 may be performed by a navigation system and/or one or more associated modules and/or applications, such as the system 100 and/or the associated modules 174, 175 illustrated in FIG. 1 . The method 200 may begin at block 205.

At block 205, a navigation system 100 and/or one or more associated applications may be initiated in association with a vehicle. The navigation system 100 may be configured to present a wide variety of information associated with a location of a vehicle and/or a route to an identified destination. Additionally, the navigation system 100 may be configured to collect and evaluate a wide variety of different types of awareness information. Based at least in part upon the awareness information, the navigation system 100 may output a wide variety of messages and/or display information to a user.

At block 2 10, location information associated with the vehicle may be identified.

For example, coordinates may be received from a suitable GPS component and evaluated to determine a location of the vehicle. As desired in various embodiments, a wide variety of other vehicle information may be identified, such as a speed, direction, and/or other suitable parameters. Additionally, in certain embodiments, a desired route, such as a route to an identified destination, may be identified or determined. As described in greater detail below, the route may be a route that attempts to avoid undesirable areas (e.g., relatively high traffic areas, relatively high crime areas, accident prone areas, etc.) based upon default and/or user preferences, as well as an evaluation of collected awareness information.

At block 215, at least one user of the navigation system, such as a driver of the vehicle, may be identified. A wide variety of suitable methods and/or techniques may be utilized to identify a user. For example, a voice sample of a user may be collected and compared to a stored voice sample. As another example, image data for the user may be collected and evaluated utilizing one or more suitable facial recognition techniques. As another example, other biometric inputs (e.g., fingerprints, etc.) may be evaluated to identify a user. As yet another example, a user may be identified based upon a determined pairing between the vehicle and a user device (e.g., a mobile device, etc.) or a personalized smart key, and/or based upon the receipt and evaluation of user identification information (e.g., a personal identification number, etc.) entered by the user. Once a user has been identified, a wide variety of user profile information and/or user preferences for the user may be obtained or determined at block 220, such as user preferences associated with types of awareness information to be obtained and evaluated, user preferences associated with sources of awareness information, user preferences associated with the generation and/or modification of a vehicle route, and/or user preferences associated with data, statistics, and/or messages to be displayed or otherwise output by a navigation system.

At block 225, a wide variety of awareness information may be collected based al least in part upon the location of the vehicle, the route, and/or at least a portion of the user preferences. For example, at block 230, crime information may be collected. At block 235, accident information and/or accident report information may be collected. At block 240, legal information may be collected. At block 245, future traffic and/or event information may be collected. At block 250, travel cost information (e.g., information associated with tolls, etc.) may be collected. The various awareness information may be collected from any number of suitable sources, such as external data sources, user devices, and/or other vehicles.

At block 255, at least a portion of the collected awareness information may be evaluated utilizing any number of suitable techniques. For example, at least a portion of the collected information may be evaluated to determine any number of awareness levels associated with various types of information, such as an accident likelihood awareness level, a crime awareness level, and/or a future or expected traffic awareness level. An awareness level may be associated with a single type of collected information or with a plurality of different information types. As another example, the collected awareness information may be evaluated to identify a wide variety of instructions (e.g., legal instructions, etc.), warnings, and/or informational content. Additionally, at block 260, a wide variety of suitable output information (e.g., audio outputs, display information, messages, etc.) may be generated based at least in part upon an evaluation of the received awareness information. The output information may then be output for presentation to the user(s) at block 265. For example, overlay information (e.g., awareness level information by street or area, etc.) may be generated for presentation via a display. As another example, icons and/or other display elements (e.g., display elements associated with accidents, crime data, etc.) may be generated. As yet another example, one or more messages may be generated for output via a display and/or speech synthesizer and/or for communication to one or more user devices (e.g., a mobile device, a tablet computer, etc.).

The method 200 may end following block 265.

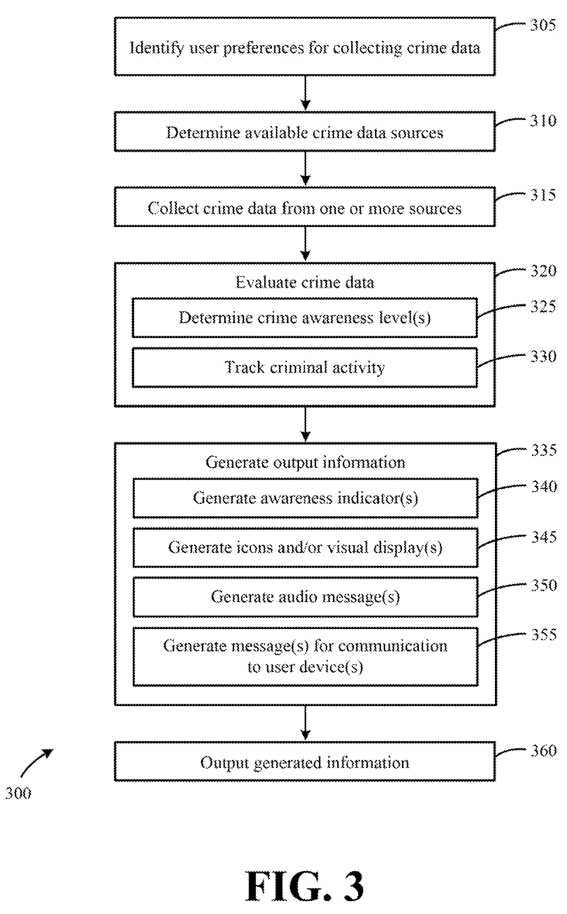

FIG. 3 is a flow diagram of an example method 300 for generating and outputting crime-related awareness information outputs associated with a vehicle and/or vehicle navigation. The crime-related awareness information evaluated by the method 300 of FIG. 3 is one example of the awareness information that may be evaluated by the method 200 of FIG. 2. Accordingly, the operations of the method 300 may be performed by a suitable navigation system and/or one or more associated modules and/or applications, such as the system 100 and/or the associated modules 174, 175 illustrated in FIG. 1. The method 300 may begin at block 305.

At block 305, any number of user preferences associated with the collection of crime data or crime awareness information may be identified. For example, user preferences stored in a user profile, obtained from a network-based server, and/or obtained from one or more user devices may be identified. A wide variety of different types of user preferences may be identified as desired, such as preferences associated with the types of crime awareness information to be collected and/or preferences associated with sources (and/or types of sources) of crime data to be collected.

At block 310, one or more available sources of crime data and/or crime awareness information may be identified or determined. A wide variety of suitable parameters may be evaluated during the identification or determination of available sources, such as user preferences, network connectivity, and/or user permission levels associated with various sources. Additionally, a wide variety of different types of crime data sources may be identified as desired in various embodiments, including but not limited to, police systems or servers, police radio announcements, network-hosted blogs, microblogs, local gossip channels, civilian reports, news agencies, social networking and/or media sites, message boards, and/or other network and/or cloud-based servers. In certain embodiments, other vehicles and/or user devices (e.g., mobile devices, tablet computers, etc.) that have previously obtained crime data may be identified as sources for crime data. Once one or more sources have been identified, crime data may be collected from the one or more sources at block 3 15. A wide variety of different types of crime and/or criminal information may be collected as desired, including but not limited to, historical crime information, crime rate information (e.g., crime rate information associated with various areas, crime rate information or a number of criminal acts associated with a specific location (e.g., a traffic light, an intersection, etc.), etc.), police report information, neighborhood watch information, information associated with current criminal activity, and/or information that tracks criminal activity.

At block 320, at least a portion of the collected crime data may be evaluated and/or otherwise processed for a wide variety of different purposes. For example, at block 325, collected crime data may be evaluated in order to determine one or more crime awareness levels (e.g., a likelihood of criminal activity in an area, a likelihood of a carjacking on a street or in an area, etc.). A wide variety of suitable algorithms and/or evaluation techniques may be utilized to determine a crime awareness level. In certain embodiments, a machine learning algorithm or other predictive algorithm may be utilized to determine a crime awareness level. Alternatively, awareness level information may be received from a data source. Additionally, as desired, awareness levels may be calculated and/or recalculated based upon a determination that a vehicle has entered a new area (e.g. a neighborhood, a township, a jurisdiction, etc.). In this regard, a user may be alerted when the vehicle enters a relatively high crime area. As another example of evaluating collected crime data, at block 330, collected data may be evaluated in order to track criminal activity and/or suspected criminals. For example, a likely location of a gang of carjackers, car thieves, or other criminals (e.g., carjackers or "pirates" in Brazil, etc.) may be determined and tracked based upon police and/or civilian crime data. Other evaluations of crime data may be performed, and the evaluations set forth above are provided by way of example only.

At block 335, a wide variety of different types of output information may be generated based at least in part upon the collected crime data and/or the evaluation of the crime data. For example, at block 340, one or more awareness indicators, such as visual information associated with the awareness level(s), may be generated. For example, display information that utilizes various colors or shading (e.g., red for a relatively high crime awareness level, yellow for a medium crime awareness level, and/or green for a relatively low crime awareness level, etc.) to illustrate different crime awareness levels for areas around the vehicle may be generated for output via a navigation display or communication to a user device. As another example of generating output information, at block 345, one or more icons and/or other visual display indicators may be generated. For example, icons associated with the tracking of criminal activity and/or the location of criminals may be generated for display. The locations and/or associated indicators may then be updated based upon the receipt of additional crime data. As another example of generating output information, at block 350, one or more audio messages may be generated for output via one or more speech synthesizers and/or speakers. For example, messages may be generated to warn a user of a relatively high crime area, to warn a user of nearby criminal activity, or to deter a user from parking a car in a relatively high crime area. Similarly, at block 355, one or more messages and/or display data may be generated for communication to one or more user devices. At block 360, at least a portion of the generated output information may be output for presentation to the user. For example, display information may be provided to one or more displays, audio information may be provided to a speech synthesizer, and/or a wide variety of messages and/or other information may be communicated to one or more user devices.

The method 300 may end following block 360. Alternatively, the method may continually collect and evaluate crime data in order to generate a wide variety of suitable output in formation for presentation to a user.

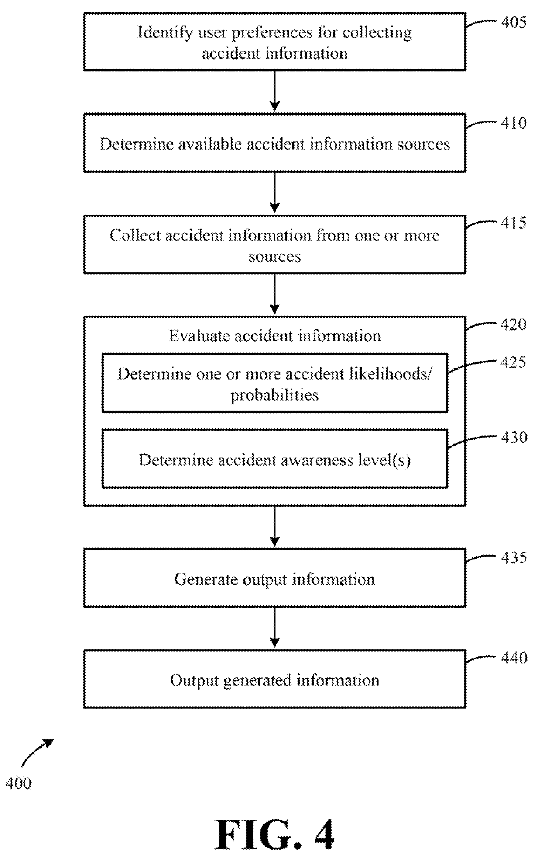

FIG. 4 is a flow diagram of an example method 400 for generating and outputting accident-related awareness information outputs associated with a vehicle and/or vehicle navigation. The accident awareness information evaluated by the method 400 of FIG. 4 is one example of the awareness information that may be evaluated by the method 200 of FIG. 2. Accordingly, the operations of the method 400 may be performed by a suitable navigation system and/or one or more associated modules and/or applications, such as the system 100 and/or the associated modules 174, 175 illustrated in FIG. 1 . The method 400 may begin at block 405.

At block 405, any number of user preferences associated with the collection of accident information or accident awareness information may be identified. For example, user preferences stored in a user profile, obtained from a network-based server, and/or obtained from one or more user devices may be identified. A wide variety of different types of user preferences may be identified as desired, such as preferences associated with the types of accident information to be collected and/or preferences associated with sources (and/or types of sources) of accident information to be collected.

At block 410, one or more available sources of accident information may be identified or determined. A wide variety of suitable parameters may be evaluated during the identification or determination of available sources, such as user preferences, network connectivity, and/or user permission levels associated with various sources. Additionally, a wide variety of different types of accident sources may be identified as desired in various embodiments, including but not limited to, police systems or servers, police radio announcements, network-hosted blogs, microblogs, local gossip channels, civilian reports, news agencies, social networking and/or media sites, message boards, and/or other network and/or cloud-based servers. In certain embodiments, other vehicles and/or user devices (e.g., mobile devices, tablet computers, etc.) that have previously obtained accident data may be identified as sources for accident data. Once one or more sources have been identified, accident data may be collected from the one or more sources at block 41 5. A wide variety of different types of accident and/or accident awareness information may be collected as desired, including but not limited to, historical information associated with vehicle accidents, information associated with current accidents, and/or in formation associated with relatively dangerous locations and/or roads.

At block 420, at least a portion of the collected accident data may be evaluated and/or otherwise processed for a wide variety of different purposes. For example, at block 425, collected accident data may be evaluated in order to determine one or more accident likelihoods and/or accident probabilities associated with various areas and/or roads. As another example of evaluating accident data, at block 430, collected accident data (and/or accident 1 likelihoods, etc.) may be evaluated in order to determine one or more accident awareness levels (e.g., awareness levels associated with a potential for an accident, awareness levels associated with current accidents, etc.). A wide variety of suitable algorithms and/or evaluation techniques may be utilized to determine an accident likelihood or an accident awareness level. In certain embodiments, a machine learning algorithm or other predictive algorithm may be utilized to determine an accident awareness level. Alternatively, likelihood and/or awareness level information may be received from a data source. Additionally, as desired, awareness levels may be calculated and/or recalculated based upon a determination that a vehicle has entered a new area. In this regard, a user may be alerted when the vehicle enters an area with a relatively high risk of accidents. Other suitable evaluations of accident information may be performed as desired. For example, collected accident data may be evaluated in order to identify locations of current accidents and/or to track the traffic delays associated with the accidents.

At block 435, a wide variety of different types of output information may be generated based at least in part upon the collected accident data and/or the evaluation of the accident data. For example, one or more awareness indicators, such as visual information associated with the accident awareness level(s) and/or accident likelihoods may be generated. For example, display information that utilizes various colors or shading to illustrate different accident awareness levels for areas around the vehicle may be generated for output via a navigation display or communication to a user device. As desired, any number of vehicle parameters (e.g., a speed, etc.) may be evaluated during the determination of an awareness level and/or the generation of visual information. For example, if it is determined that a driver is traveling loo quickly through an accident prone section of a highway or as the driver approaches an existing accident, then a higher awareness level and/or suitable warning indicators may be generated. As another example of generating output information, one or more icons and/or other visual display indicators (e.g., locations of existing accidents, etc.) may be generated. As another example, one or more audio messages may be generated for output via one or more speech synthesizers and/or speakers. Similarly, one or more messages and/or display data may be generated for communication to one or more user devices. At block 440, at least a portion of the generated output information may be output for presentation to the user. For example, display information may be provided to one or more displays, audio information may be provided to a speech synthesizer, and/or a wide variety of messages and/or other information may be communicated to one or more user devices.

The method 400 may end following block 440. Alternatively, the method may continually collect and evaluate accident information in order to generate a wide variety of suitable output information for presentation to a user.

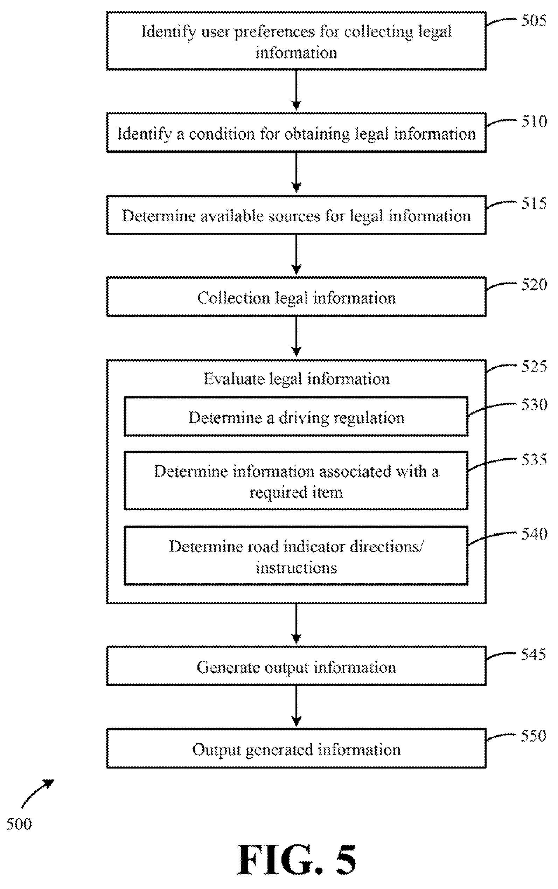

FIG. 5 is a flow diagram of an example method 500 for generating and outputting legal-related awareness information outputs associated with a vehicle and/or vehicle navigation. The legal-related awareness information evaluated by the method 500 of FIG. 5 is one example of the awareness information that may be evaluated by the method 200 of FIG. 2. Accordingly, the operations of the method 500 may be performed by a suitable navigation system and/or one or more associated modules and/or applications, such as the system 100 and/or the associated modules 174, 175 illustrated in FIG. 1. The method 500 may begin at block 505.

At block 505, any number of user preferences associated with the collection of legal information or legal awareness information may be identified. For example, user preferences stored in a user profile, obtained from a network-based server, and/or obtained from one or more user devices may be identified. A wide variety of different types of user preferences may be identified as desired, such as preferences associated with the types of legal information to be collected, preferences associated with sources (and/or types of sources) of legal information to be collected, and/or preferences associated with conditions for obtaining legal information. At block 5 10, one or more conditions for obtaining legal information may be identified. In certain embodiments, a location of a vehicle may be monitored, and a determination may be made to collect legal information based upon changes in the location and/or any number of user preferences. For example, a condition for collecting legal information may be identified based upon a determination that a vehicle has crossed over a border (e.g., crossed a state line, etc.) and/or entered a new area (e.g., entered a city or other jurisdiction, entered a new country, etc.). As desired, temporal information (e.g., time of day, day of week, day of a month, etc.) may also be evaluated during the identification of a condition. As another example, a condition may be identified based upon historical travel information associated with the vehicle and/or information associated with a "home area" of the vehicle. For example, a condition may be identified if the vehicle has travelled to a relatively new area (e.g., an area not regularly visited, etc.) and/or if the vehicle has travelled outside of a predefined or historically determined "home area." Additionally, although the identification of conditions is described at block 5 10 as being relevant to the collection of legal information, as desired in various embodiments, conditions may also be evaluated in conjunction with the collection of other types of awareness information.

At block 515, one or more available sources of legal information may be identified or determined. A wide variety of suitable parameters may be evaluated during the identification or determination of available sources, such as user preferences, network connectivity, and/or user permission levels associated with various sources. Additionally, a wide variety of different types of legal information sources may be identified as desired in various embodiments, including but not limited to, police systems or servers, police radio announcements, network-hosted blogs, microblogs, local gossip channels, civilian reports, news agencies, tourism systems, social networking and/or media sites, message boards, and/or other network and/or cloud-based servers. In certain embodiments, other vehicles and/or user devices (e.g., mobile devices, tablet computers, etc.) that have previously obtained legal information may be identified as sources for legal information. Once one or more sources have been identified, legal information may be collected from the one or more sources at block 520. A wide variety of different types of legal information may be collected as desired, including but not limited to, driving regulations (e.g., traffic laws, road use restrictions, etc.), information associated with items required to be maintained within the vehicle (e.g., safety orange reflective triangles in France, etc.), directions associated with various road or travel indicators (e.g., instructions for interacting with local road indicators in Portland, Oregon, etc.).

At block 525, at least a portion of the collected legal information may be evaluated and/or otherwise processed for a wide variety of different purposes. For example, at block 530, collected legal information may be evaluated in order to determine one or more driving regulations (e.g., traffic laws, etc.). As another example, at block-535, collected legal information may be evaluated in order to determine information associated with one or more required items to be maintained in a vehicle. As yet another example, at block 540, collected legal information may be evaluated in order to determine road indicator instructions and/or directions. Indeed, a wide variety of different types of legal rules, requirements, regulations, and/or suggestions may be identified based upon an analysis of collected legal information. Additionally, in certain embodiments, a vehicle location and/or a wide variety of vehicle parameters may be evaluated in conjunction with legal information and/or identified legal rules. For example, a local regulation may provide for a reduced speed limit in the event of rain or other precipitation. Vehicle sensor data may be evaluated in order to identify rain and/or to determine that the vehicle is traveling above the reduced speed limit. As another example, a local regulation may limit the vehicles that may travel on a given road as a function of a license plate number or other registration number. For example, in Beijing, on any given day (and/or at given times), only vehicles having certain license plates may utilize a particular road. Stored vehicle information (e.g., license and/or registration information) and temporal information may be evaluated in conjunction with the regulation in order to determine whether the vehicle is permitted to travel on the particular road.

At block 545, a wide variety of different types of output information may be generated based at least in part upon the collected legal information and/or the evaluation of the legal information. For example, a wide variety of visual information associated with the legal information, such as indications of which roads a vehicle is permitted to travel on, may be generated. As another example, vehicle information may be evaluated in order to determine that a taillight is blown or not functioning properly, and visual information identifying roads on which the vehicle is not permitted to travel (e.g., roads requiring properly functioning taillights) may be generated. As desired, a route of the vehicle may also be modified or altered in an attempt to avoid roads on which the vehicle is not permitted to travel. As another example, one or more audio messages may be generated for output via one or more speech synthesizers and/or speakers. For example, a warning message may be generated if it is determined that a vehicle is speeding. As another example, if the vehicle enters a new jurisdiction, one or more messages associated with local driving regulations and/or requirements may be generated, such as a message indicating that right turns are not permitted on red unless marked or a message indicating that certain items or equipment are required to be maintained in the vehicle. Similarly, one or more messages and/or display data may be generated for communication to one or more user devices. At block 550, at least a portion of the generated output information may be output for presentation to the user. For example, display information may be provided to one or more displays, audio information may be provided to a speech synthesizer, and/or a wide variety of messages and/or other information may be communicated to one or more user devices.

The method 500 may end following block 550. Alternatively, the method may continually collect and evaluate legal information in order to generate a wide variety of suitable output information for presentation to a user.

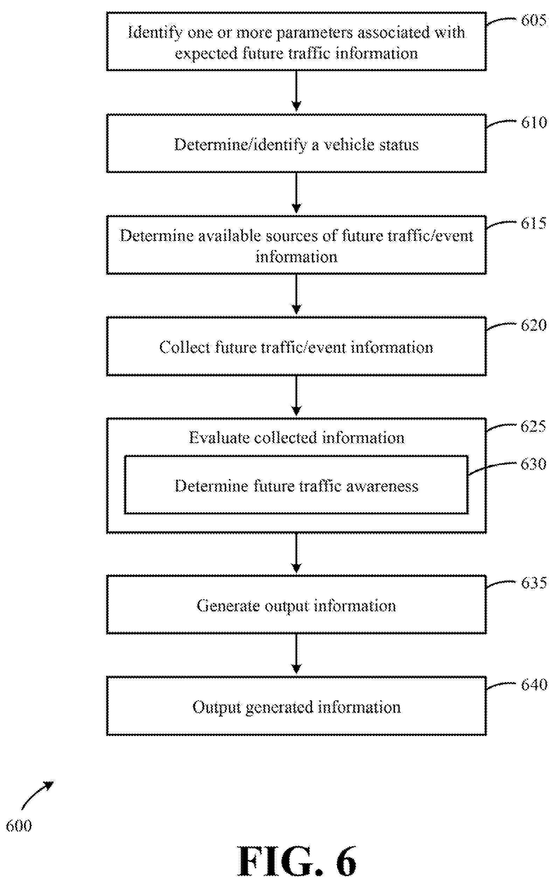

FIG. 6 is a flow diagram of an example method 600 for generating and outputting future traffic and/or-event related awareness information outputs associated with a vehicle and/or vehicle navigation. The future traffic and/or event-related awareness information evaluated by the method 600 of FIG. 6 is one example of the awareness information that may be evaluated by the method 200 of FIG. 2. Accordingly, the operations of the method 600 may be performed by a suitable navigation system and/or one or more associated modules and/or applications, such as the system 100 and/or the associated modules 174, 175 illustrated in FIG. 1. The method 600 may begin at block 605.

At block 605, any number of user preferences and/or parameters associated with the collection of future traffic and/or event information may be identified. For example, user preferences stored in a user profile, obtained from a network-based server, and/or obtained from one or more user devices may be identified. A wide variety of different types of user preferences may be identified as desired, such as preferences associated with the types of traffic and/or event information to be collected, preferences associated with sources (and/or types of sources) of traffic and/or event information to be collected, and/or preferences associated with desired types of output information. At block 610, a status of the vehicle may be determined or identified. For example, one or more vehicle parameters (e.g., speed, gear, etc.) may be collected and .evaluated in order to determine or identify a vehicle status (e.g., whether the vehicle is in motion, stopped, in park, etc.).

At block 615, one or more available sources of future traffic and/or event information may be identified or determined. A wide variety of suitable parameters may be evaluated during the identification or determination of available sources, such as user preferences, network connectivity, and/or user permission levels associated with various sources. Additionally, a wide variety of different types of future traffic and/or event information sources may be identified as desired in various embodiments, including but not limited to, police systems or servers, police radio announcements, network-hosted blogs, microblogs, local gossip channels, civilian reports, news agencies, tourism systems, local radio systems, ticketing systems, social networking and/or media sites, message boards, and/or other network and/or cloud-based servers. In certain embodiments, other vehicles and/or user devices (e.g., mobile devices, tablet computers, etc.) that have previously obtained future traffic and/or event data may be identified as sources for relevant data. Once one or more sources have been identified, future traffic and/or event information may be collected from the one or more sources at block 620. A wide variety of different types of future traffic and/or event information may be collected as desired, including but not limited to, historical traffic information, information associated with expected traffic conditions for various areas due to a wide variety of factors (e.g., day of the week, day of the month, time of day, expected events, etc.), information associated with events that may affect traffic conditions (e.g., concerts, sporting events, etc.), and/or information associated with an expected impact on traffic by various events.

At block 625, at least a portion of the collected future traffic and/or event information may be evaluated and/or otherwise processed for a wide variety of different purposes. For example, at block 630, collected information may be evaluated in order to determine future traffic awareness levels associated with various roads and/or areas. As desired, future traffic information and/or awareness levels may be identified for any number of future periods of lime. Additionally, in certain embodiments, a determined vehicle status may be taken into consideration during the determination of one or more awareness levels. For example, in the event that the vehicle is being parked, a location of the parked vehicle may be determined, and information associated with ongoing and/or future events that may affect traffic conditions may be determined. In this regard, the driver may be informed of a future event and provided with information associated with the event. For example, a user may be warned that a baseball game will conclude at approximately seven o'clock. Accordingly, in order to avoid traffic associated with the baseball game, the user may leave prior to the conclusion of the baseball game.

At block 635, a wide variety of different types of output information may be generated based at least in part upon the collected future traffic information and/or the evaluation of the future traffic information. For example, a wide variety of visual information associated with expected traffic conditions, such as traffic awareness indicators (e.g., color coded awareness indicators, etc.), may be generated. As another example, vehicle information may be evaluated in order to determine a vehicle status (e.g., parked, etc.), and one or more messages associated with expected traffic and/or events may be generated for output to the user. For example, a warning message may be generated if it is determined that a vehicle is being parked in an area associated with a future event. Additional ly, as desired, a route of the vehicle may also be modified or altered in an attempt to avoid relatively heavy expected traffic on which the vehicle is not permitted to travel . At block 640, at least a portion of the generated output information may be output for presentation to the user. For example, display information may be provided to one or more displays, audio information may be provided to a speech synthesizer, and/or a wide variety of messages and/or other information may be communicated to one or more user devices.

The method 600 may end following block 640. Alternatively, the method may continually collect and evaluate future traffic information in order to generate a wide variety of suitable output information for presentation to a user.

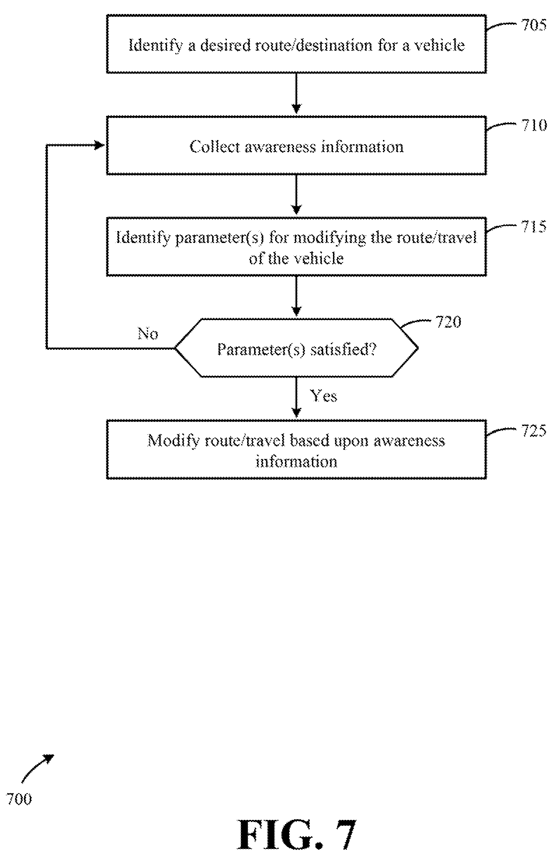

FIG. 7 is a flow diagram of an example method 700 for modifying a vehicle route based at least in part upon awareness information. As desired, the operations of the method 700 may be performed by a suitable navigation system and/or one or more associated modules and/or applications, such as the system 100 and/or the associated modules 174, 175 illustrated in FIG. 1. The method 700 may begin at block 705.

At block 705, a desired route, such as a route to an identified destination, may be identified or determined. Additionally, or alternatively, a desired or designated destination of the vehicle may be identified. At block 710, a wide variety of suitable awareness information, such as crime data, accident data, legal data, future traffic data, and/or expected travel cost data, may be collected from any number of suitable data sources.

At block 715, any number of parameters associated with the generation and/or modification of a vehicle route and/or directions of travel may be identified. For example, default and/or user preferences associated with the avoidance of relatively high crime areas and/or criminal activity, areas having a relatively high accident likelihood, areas associated with current accidents, areas in which legal regulations limit or prohibit travel for the vehicle, areas having a relatively high travel cost, and/or areas that may be affected by relatively high expected future traffic may be identified. The parameters may set forth a wide variety of suitable threshold conditions associated with the modification of a vehicle route in order to avoid undesirable roads and/or areas. Alternatively, certain parameters may set forth a wide variety of threshold conditions associated with the modification of a vehicle route in order to utilize desirable roads and/or areas (e.g., relatively low crime areas, low driver demand routes, etc.).

At block 720, a determination may be made as to whether the one or more parameters have been satisfied. In other words, a determination may be made as to whether a vehicle route should be modified based upon the one or more parameters. Similarly, a determination may be made as to whether a warning message associated with a direction of travel, as well as a suggestion to map an alternate route, should be generated based at least in part upon an evaluation of the one or more parameters. If it is determined al block 720 that the one or more parameters have not been satisfied, then operations may continue at block 710. and awareness information may continue to be collected and evaluated. I f, however, it is determined at block 720 that at least one parameter has been satisfied, then operations may continue at block 725. At block 725, a route of the vehicle may be modified based at least in part upon the awareness information. Alternatively, a suitable warning message and/or invitation to modify a route may be generated and output to a user. In either event, as desired in various embodiments, a user may be permitted to approve or reject a proposed route modification. In other embodiments, a route may be automatically modified. As a result of modifying a vehicle route, attempts may be made to avoid undesirable areas (e.g., relatively high traffic areas, relatively high crime areas, accident prone areas, etc.), thereby enhancing the safely and/or time management of the users.

The method 700 may end following block 725. Alternatively, the method may continually collect and evaluate awareness information in order to modify or adjust a route of a vehicle.

The operations described and shown in the methods 200, 300, 400, 500, 600, 700 of FIGS. 2-7 may be carried out or performed in any suitable order as desired in various embodiments of the invention. Additionally, in certain embodiments, at least a portion of the operations may be carried out in parallel. Furthermore, in certain embodiments, less than or more than the operations described in FIGS. 2-7 may be performed.

Certain embodiments of the disclosure described herein may have the technical effect of enhancing user awareness and/or understanding of a vehicle environment. For example, location information associated with a vehicle may be utilized to collect a wide variety of information that enhances user awareness, such as crime data, legal data, future traffic data, and/or accident data. A wide variety of suitable outputs and/or presentations may then be generated based upon an evaluation of the collected data in order to enhance user awareness.

Certain aspects of the disclosure are described above with reference to block and flow diagrams of systems, methods, apparatus, and/or computer program products according to example embodiments. It will be understood that one or more blocks of the block diagrams and flow diagrams, and combinations of blocks in the block diagrams and the flow diagrams, respectively, can be implemented by computer-executable program instructions. Likewise, some blocks of the block diagrams and flow diagrams may not necessarily need to be performed in the order presented, or may not necessarily need to be performed at all, according to some embodiments.

These computer-executable program instructions may be loaded onto a special-purpose computer or other particular machine, a processor, or other programmable data processing apparatus lo produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, certain embodiments may provide for a computer program product, comprising a computer-usable medium having a computer-readable program code or program instructions embodied therein, said computer-readable program code adapted to be executed lo implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain embodiments could include, while other embodiments do not include, certain features, elements, and/or operations. Thus, such conditional language is not generally intended to imply that features, elements, and/or operations are in any way required for one or more embodiments or that one or more embodiments necessarily include logic for deciding, with or without user input or prompting, whether these features, elements, and/or operations are included or are to be performed in any particular embodiment.

Many modifications and other embodiments of the disclosure set forth herein will be apparent having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Features of embodiment of different aspects of the invention:
1. At least one computer-readable medium comprising computer-executable instructions that, when executed by at least one processor, configure the at least one processor to:
   determine information associated with a location of a vehicle;
   collect, based at least in part upon the determined location, awareness information associated with the vehicle, the awareness information comprising at least one of (i) crime information, (ii) accident information, (iii) legal information, or (iv) future traffic information;
   generate, based at least in part upon the collected awareness information, output information for presentation; and
   direct output of the generated output information.
2. The computer-readable medium of Claim 1, wherein the awareness information comprises crime information, and wherein the computer-executable instructions further configure the at least one processor to track, based at least in part upon the crime information, a location of criminal activity.
3. The computer-readable medium of Claim 1, wherein the awareness information comprises vehicle accident information, and wherein the computer-executable instructions further configure the at least one processor to determine, based at least in part upon the vehicle accident information, an accident likelihood.
4. The computer-readable medium of any one of claims 1 to 3, wherein the computer-executable instructions further configure the at least one processor to:
   determine, based at least in part upon the awareness information, an awareness level,
   wherein the generated output information comprises an indication of the determined awareness level.
5. A computer-implemented method comprising:
   determining, by a navigation system comprising one or more computer processors, information associated with a location of a vehicle;
   collecting, by the navigation system based at least in part upon the determined location, awareness information associated with the vehicle, the awareness information comprising at least one of (i) crime information, (ii) accident information, (iii) legal information, or (iv) future traffic information;
   generating, by the navigation system based at least in part upon the collected awareness information, output information for presentation; and
   outputting, by the navigation system, the generated output information.
6. The method of Claim 5, wherein the awareness information comprises crime information, and further comprising:
   tracking, by the navigation system based at least in part upon the crime information, a location of criminal activity.
7. The method of Claim 5, wherein collecting awareness information comprises collecting vehicle accident information, and further comprising:
   determining, by the navigation system based at least in part upon the vehicle accident information, an accident likelihood.
8. The method of Claim 5, further comprising:
   collecting, by the navigation system based at least in part upon the determined location, information associated with the cost of travel,
   wherein generating output information comprises generating output information associated with the cost of travel.
9. The method of Claim 5, further comprising:
   determining, by the navigation system based at least in part upon the awareness information, an awareness level,
   wherein generating output information comprises generating an indication of the determined awareness level.
10. The method of Claim 5, further comprising:
   identifying, by the navigation system, one or more vehicle parameters,
   wherein generating output information comprises generating output information based at least in part upon the identified one or more vehicle parameters.
11. The method of any one of claims 5 to 10, further comprising:
   determining, by the navigation system based at least in part upon the awareness information, a route for the vehicle.
12. A system comprising;
   means to determine information associated with a location of a vehicle;
   means to collect, based at least in part upon the determined location, awareness information associated with the vehicle, the awareness information comprising at least one of (i) crime information, (ii) accident information, (iii) legal information, or (iv) future traffic information;
   means to generate, based at least in part upon the collected awareness information, output information for presentation; and
   means to direct output of the generated output information.
13. The system of Claim 12, wherein the at least one processor is further configured to execute the computer-executable instructions to:
   determine, based at least in part upon the awareness information, an awareness level,
   wherein the generated output information comprises an indication of the determined awareness level.
14. The system of Claim 12, wherein the at least one processor is further configured to execute the computer-executable instructions to:
   identify one or more vehicle parameters; and
   generate the output information based at least in part upon the identified one or more vehicle parameters.
15. The system of any one of claims 12 to 14, wherein the at least one processor is further configured to execute the computer-executable instructions to:
   determine, based at least in part upon the awareness information, a route for the vehicle.

## Claims

1. A navigation system comprising:
a global positioning system device;
a processor to:
determine information associated with a location of a vehicle;
collect based at least in part upon the determined location, awareness information associated with the vehicle's location, the awareness information comprising a road use restriction;
generate, by the navigation system based at least in part upon the collected awareness information, output information for presentation; and
output the generated output information; and
a display coupled to said processor.

2. The system of claim 1, said processor to detect when a state border is crossed.

3. The system of claim 1, said processor to detect when a country border is crossed.

4. The system of claim 1, said processor to detect when legal regulations limit or prohibit travel.

5. The system of claim 1, said processor to propose a route modification in response to said awareness information.
